# EUROPÄISCHE PATENTSCHRIFT

(11) **EP 0 453 934 B1**
(45) Veröffentlichungstag und Bekanntmachung des Hinweises auf die Patenterteilung: **19.06.1996**
(21) Anmeldenummer: 91106085.3
(22) Anmeldetag: 17.04.1991
(51) Int. Cl.: H04N 3/233, H04N 9/28

(54) **Einrichtung zur Rasterkorrektur in einem Fernsehgerät**
Raster correction device in a television set
Dispositif pour correction de trame dans un appareil de télévision

(30) Priorität: 25.04.1990 DE 4013123
(43) Veröffentlichungstag der Anmeldung: 30.10.1991
(73) Patentinhaber: DEUTSCHE THOMSON-BRANDT GMBH, D-78048 Villingen-Schwenningen (DE)
(72) Erfinder: Gleim, Günter, Dipl.-Ing., W-7730 VS-Villingen (DE); Chauvin, Jacques, Dipl.-Ing., W-7733 Mönchweiler (DE)

(56) Entgegenhaltungen:
- EP-A- 0 062 529
- GB-A- 2 102 258
- PATENT ABSTRACTS OF JAPAN, Band 14, Nr. 324 (E-951)[4267], 11. Juli 1990; & JP-A-02 107 089 (SONY CORP.) 19-04-1990 (Kat. A)

## Beschreibung

Die Erfindung geht aus von einer Einrichtung gemäß dem Oberbegriff des Anspruchs 1. Eine derartige Einrichtung dient z.B. in einem Projektions-Fernsehgerät zur Korrektur der Konvergenz.

Es ist bekannt, durch ein Gittermuster aus horizontalen und vertikalen Linien auf dem Bildschirm eine Vielzahl von Bildpunkten zu definieren, für diese Bildpunkte Korrekturwerte zu ermitteln, diese in einem Speicher abzulegen und bei der Wiedergabe nacheinander für die einzelnen Bildpunkte einer Korrekturspule zuzuführen. Die Korrekturspule kann die Ablenkspule selbst sein. Vorzugsweise wird eine getrennte Korrekturspule verwendet, da für die schnellen Korrekturvorgänge die Induktivität der Ablenkspule im allgemeinen zu groß ist.

Aufgrund der Induktivität der Korrekturspule ist der in der Spule fließende Korrekturstrom gegenüber der angelegten Korrekturspannung verzögert. Wenn somit bei einem bestimmten Bildpunkt Kn ein Korrekturstrom mit seinem Nennwert fließen soll, muß die den Korrekturstrom bewirkende Korrekturspannung entsprechend früher an die Korrekturspule angelegt werden. Es ist daher bekannt, den Korrekturvorgang für einen Bildpunkt Kn in dem in Zeilenrichtung davorliegenden Bildpunkt Kn-1 zu starten, d.h. die Korrekturspannung an die Spule anzulegen. Dadurch kann erreicht werden, daß der Korrekturstrom für den Bildpunkt Kn bei diesem Bildpunkt seinen Nennwert erreicht, der für diesen Bildpunkt ermittelt wurde.

Eine Einrichtung zur Rasterkorrektur in einem Fernsehgerät gemäß dem Oberbegriff des Anspruchs 1 ist aus der EP-A-0 062 529 bekannt. Hier wird ein Korrekturstrom für eine Ablenkspule erzeugt, dessen Signalform um eine konstante Zeit vorverschoben ist.

Aus der nachveröffentlichten JP-A-02 107 089 & PATENT ABSTRACTS OF JAPAN, B. 14, Nr. 324 (E-951) [4267] ist eine weitere Einrichtung zur Rasterkorrektur bekannt, bei der der Korrekturstrom zeitlich verschoben wird.

Es hat sich gezeigt, daß trotzdem Abweichungen in der Lage des Nennwertes des Korrekturstromes relativ zu dem zugeordneten Bildpunkt auftreten, indem der Nennwert erst nach dem zugeordneten Bildpunkt erreicht wird, der Korrekturstrom also bei dem Bildpunkt selbst seinen Nennwert noch nicht erreicht hat.

Der Erfindung liegt die Aufgabe zugrunde, derartige Abweichungen zwischen dem Bildpunkt und dem Nennwert des zugeordneten Korrekturstromes möglichst gut zu kompensieren.

Diese Aufgabe wird durch die im Anspruch 1 angegebene Erfindung gelöst. Vorteilhafte Weiterbildungen der Erfindung sind in den Unteransprüchen angegeben.

Die Erfindung beruht auf folgender Überlegung. Die Verstärker und sonstige Bauteile im Korrektursignalweg haben unvermeidbar eine Verzögerung oder Totzeit. Das bedeutet, daß zwischen dem Anlegen der Korrekzurspannung und dem Beginn des durch die Induktivität verlangsamten Anstieg des Korrekturstromes eine bestimmte Zeit verstreicht, die eine zusätzliche zeitliche Verschiebung zwischen dem Erreichen des Nennwertes des Korrekturstromes und dem zugeordneten Bildpunkt bewirkt. Bei der Erfindung wird diese Zeit einkalkuliert, indem der Startpunkt für das Anlegen der Korrekturspannung entsprechend vorverlegt wird. Auf diese Weise kann eine genaue Deckung zwischen dem zu korrigierenden Bildpunkt und dem Nennwert des Korrekturstromes erreicht werden. Insbesondere ist durch einen entsprechenden Abgleich eine individuelle Anpassung an die jeweiligen Verstärker im Korrektursignalje Gerät möglich. Durch die Erfindung können auch andere Einflüsse ausgeglichen werden, die eine Verschiebung des Nennwertes relativ zu dem zu korrigierenden Bildpunkt bewirken. Die Erfindung erfordert praktisch keinen Mehraufwand, da nur die Befehle für die Ausgabe der Werte aus dem Speicher entsprechend geändert werden müssen.

Die Erfindung wird im folgenden anhand der Zeichnung erläutert. Darin zeigen
- Fig. 1: einen Bildschirm mit dem Gittermuster,
- Fig. 2: Kurven zur Erläuterung der Erfindung und
- Fig. 3: im Prinzip die Korrekturschaltung.

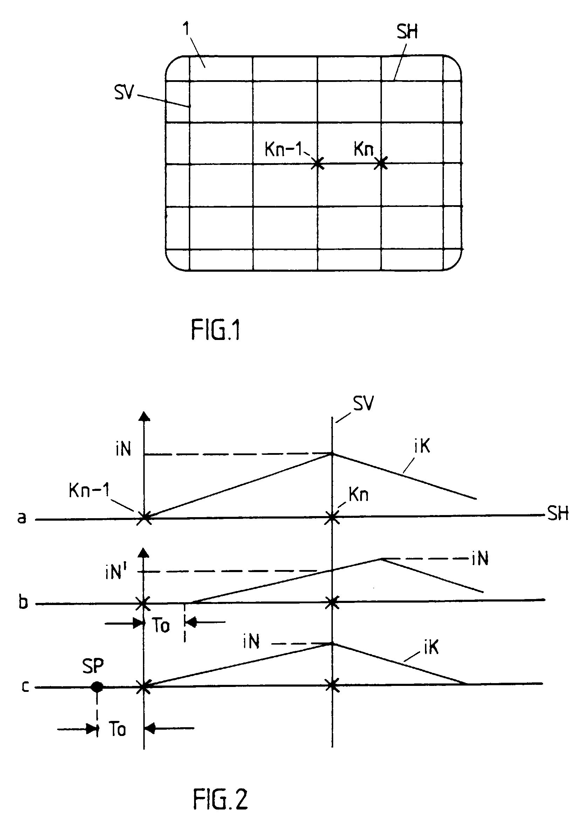

In Fig. 1 ist auf dem Bildschirm 1 durch waagerechte Linien SH und senkrechte Linien SV eine Vielzahl von Bildpunkten K definiert, die durch die jeweiligen Kreuzungspunkte der Linien gebildet sind. Dargestellt sind ein Bildpunkt Kn und der in Zeilenrichtung davor liegende Bildpunkt Kn-1. In der Praxis ist die Zahl der so definierten Bildpunkte wesentlich größer.

Fig. 2a zeigt den angestrebten Idealfall. Der Korrekturstrom ik für den Bildpunkt Kn wird bei dem Bildpunkt Kn-1 gestartet. Durch die Wirkung der Induktivität der Korrekturspule steigt der Korrekturstrom ik an und erreicht seinen Nennwert iN, der für die Korrektur des Bildpunktes Kn notwendig ist, exakt bei diesem Bildpunkt Kn.

Fig. 2b zeigt, daß durch eine Laufzeit oder Totzeit To im Korrektursignalweg der Beginn des Anstiegs des Korrekturstromes ik verzögert ist. Der Korrekturstrom ik erreicht seinen Nennwert iN erst nach dem zugeordneten Bildpunkt Kn. Das bedeutet, daß beim Bildpunkt Kn, für den der Korrekturstrom ik vorgesehenist,der Korrekturstrom nur den geringeren Wert iN' aufweist, also vom richtigen Wert iN abweicht.

Gemäß Fig. 2c ist der Startpunkt SP für den Beginn der Korrektur um die Zeit To vorverlegt. Vorzugsweise ist die den Korrekturstrom auslösende Korrekturspannung entsprechend früher an die Korrektureinrichtung angelegt. Der Korrekturstrom ik erreicht jetzt seinen Nennwert iN wieder genau beim zugeordneten Bildpunkt Kn, für den dieser Korrekturstrom vorgesehen ist. Es wird also eine einwandfreie Korrektur des jeweiligen Parameters für den Bildpunkt Kn durch den ermittelten Nennwert iN sichergestellt. Nach dem Bildpunkt Kn läuft der Korrekturstrom ik durch entsprechende Extrapolation, beispielsweise durch Integration, auf den Wert für den nächstfolgenden Bildpunkt Kn+1.

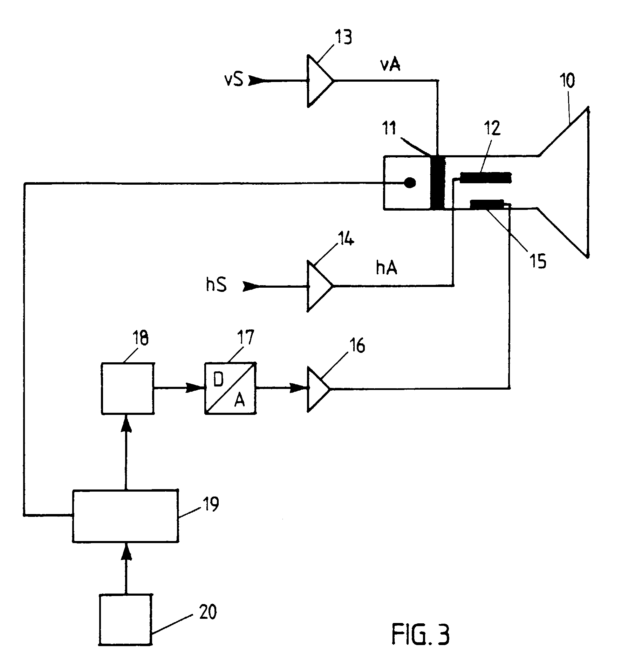

Die erfindungsgemäße Einrichtung ist symbolisch in Fig. 3 dargestellt. Einer Bildröhre 10 ist eine Vertikalablenkspule 11 und eine Horizontalablenkspule 12 zugeordnet. Der Vertikalablenkspule 11 wird ein Signal vA von dem Ausgang eines Vertikalverstärkers 13 zugeleitet, dessem Eingang ein Vertikal-Ablenksignal vS zugeführt wird.

In analoger Weise erhält die Horizontalablenkspule 12 ein Signal hA von dem Ausgang eines Horizontalverstärkers 14, dessem Eingang ein Horizontal-Signal hS zugeführt wird. Die von einem nicht dargestellten Bildgenerator stammenden Signale hS und vS sind an sich bekannt und auf sie soll an dieser Stelle nicht weiter eingegangen werden.

Der Bildröhre ist weiterhin eine Korrekturspule 15 zugeordnet, die mit dem Ausgang eines Korrekturverstärkers 16 verbunden ist. Dessen Eingang ist mit dem Ausgang eines Digital/Analog (D/A) - Wandlers 17 verbunden, der an seinem Eingang Signale von einem ersten Speicher 18 erhält, in dem Nennwerte iN des Korrekturstroms für die einzelnen Bildpunkte K abgespeichert sind.

Der Steuereingang des ersten Speichers 18 ist mit einer Taktsteuerung 19 verbunden, der über einen ersten Eingang das Ausgangssignal vA des Vertikalverstärkers 13 und über einen zweiten Eingang das Ausgangssignal hA des Horizontal-Verstärkers 14 zugeführt wird.

Weiterhin ist ein dritter Eingang der Taktsteuerung 19 mit einem zweiten Speicher 20 verbunden, in dem Werte bezüglich der Totzeit To abgespeichert sind.

Ein erster Ausgang der Taktesteuerung 19 ist mit dem Steuereingang des ersten Speichers 18 verbunden und ein zweiter Ausgang der Taktsteuerung 19 führt zu dem Steuereingang der Bildröhre 10, durch welchen die Helligkeit von Bildpunkten gesteuert werden kann.

Die Funktion der erfindungsgemäßen Einrichtung wird im folgenden mit Hilfe von Fig. 2 erläutert.

Die zuvor bestimmten Werte der Totzeit To, werden von dem zweiten Speicher 20 in die Taktsteuerung 19 eingelesen, welche durch die beiden Signale vA und hA angesteuert wird.

Statt der Ausgangssignale vA und hA können auch die Eingangssignale vS und hS oder sonstige mit diesen Signalen gekoppelten Signale zur Ansteuerung der Taktsteuerung 19 verwendet werden.

Die Taktsteuerung 19 steuert in Abhängigkeit von den Signalen zum einen die Bildröhre 10 derart an, daß ein Gittermuster, wie in Fig. 2 gezeigt, erzeugt wird.

Weiterhin steuert die Taktsteuerung 19 den ersten Speicher 18 an, der daraufhin Nennwerte iN des Korrekturstroms iK, wie im Zusammenhang mit Fig 2 beschrieben, ausliest und entsprechende Signale an den Eingang des D/A-Wandlers 17 abgibt.

Die derart bestimmten Werte der Korrekturspannung Uk werden durch, den Korrekturverstärker 16 verstärkt, so daß an dessen Ausgang eine Spannung anliegt, die einen Korrekturstrom ik durch die Korrekturspule 15 verursacht. Dadurch wird die Korrektur wie beschrieben durchgeführt.

Die Bestimmung der Totzeit To kann auf verschiedene Weisen erfolgen. Soll der Einfachheit halber davon ausgegangen werden, daß sie lediglich von verwendeten Bauelementen, wie beispielsweise dem Korrekturverstärker 16, dem D/A-Wandler 17, der Korrekturspule 15, usw., abhängt, kann sie durch zeitliche Signalverlauf-Messungen bestimmt werden und anschließend als Wert in den zweiten Speicher 20 eingelesen werden.

Es hat sich jedoch bei einigen Fernsehgeräten herausgestellt, daß die Totzeit To ebenfalls von der Lage des Bildpunkts K abhängt.

In diesem Fall wird ein zweites Ausführungsbeispiel verwendet, bei dem bildpunktabhängige Totzeitwerte To(K) in dem zweiten Speicher 20 abgespeichert wurden und durch eine entsprechende Ansteuerung des zweiten Speichers 20 mittels Signalen, die mit dem Vertikalsignal vS und dem Horizontalsignal hS gekoppelt sind, erfolgt. Diese Ansteuerung kann beispielsweise durch die Taktsteuerung 19 erfolgen, wozu eine entsprechende Verbindung zwischen dieser und dem zweiten Speicher 20 vorgesehen ist.

Bei weiteren Versionen kann die Totzeit To bzw. der Startpunkt SP durch dem Fachmann an sich bekannte adaptive Verfahren bestimmt und anschließend berücksichtigt werden.

Eine Variante der beiden genannten Ausführungsbeispiele sieht vor, daß die Korrektur der Bildpunkte K mittels der Horizontalspule 12 und gegebenenfalls der ihr angeschlossenen Bauelemente durchgeführt wird.

Damit kann auf die Korrekturspule 15 und eventuell zusätzlich auf den Korrekturverstärker 16 verzichtet werden. Das Signal des D/A-Wandlers 17 wird in diesem Fall dem Eingang des Horizontalverstärkers 14 bzw. einer statt diesem verwendeten Verstärkerstufe zugeführt.

Zu erwähnen bliebe, daß der übersichtlichkeit wegen, nur die Korrekturspule für die Horizontalblenkung beschrieben wurde. üblicherweise ist jedoch auch eine Korrekturspule für die Vertikalablenkung erforderlich.

Die Korrekturen gemäß der erfindungsgemäßen Einrichtung erfolgt vorzugsweise bei einem Projektionsfernsehgerät für drei Bildröhren für die Grundfarben R, G, B, und zwar jeweils für die Konvergenz in Horizontalrichtung und in Vertikalrichtung. Den drei Bildröhren sind dann insgesamt sechs derart gesteuerte Korrekturspulen 15 zugeordnet.

## Patentansprüche

1. Einrichtung zur Rasterkorrektur in einem Fernsehgerät, bei der für durch ein Gittermuster definierte Bildpunkte (K) jeweils ein Korrekturstrom (ik) einer die Ablenkung beeinflussenden Spule zugeführt wird und jeweils der Korrekturstrom für einen Bildpunkt Kn bei einem Startpunkt (SP) im Bereich des in Horizontalrichtung davor liegenden Bildpunktes Kn-1 ausgelöst wird, **gekennzeichnet** durch eine Einrichtung zur Verschiebung des Startpunktes (SP) um einen solchen Totzeitwert (To) vor den Bildpunkt Kn-1, daß Laufzeiten im Korrektursignalweg ausgeglichen werden und der Nennwert (iN) des dem Bildpunkt Kn zugeordneten Korrekturstroms (ik) beim Bildpunkt Kn erreicht wird, und durch einen Speicher (20), in dem die bildpunktabhängigen Totzeitwerte (To) für die einzelnen Bildpunkte des Bildes gespeichert sind, welche durch eine Ansteuerung des Speichers (20) durch mit dem Vertikalsignal (vS) und dem Horizontalsignal (hS) gekoppelte Signale ausgelesen und zur Korrektur verwendet werden.

2. Einrichtung nach Anspruch 1, **dadurch gekennzeichnet**, daß die zeitliche Lage des Startpunktes (SP) abgleichbar ist.

3. Einrichtung nach Anspruch 1 oder 2, **dadurch gekennzeichnet**, daß der Wert der Totzeit (To(K)) in Abhängigkeit von der Lage des Bildpunktes bestimmt und bei der Korrektur berücksichtigt wird.

4. Einrichtung nach einem der Ansprüche 1 bis 3, **dadurch gekennzeichnet**, daß der Wert für die Totzeit (To bzw. To(K)) adaptiv bestimmt wird.

## Claims

1. Equipment for correcting the raster in a television apparatus in which, for each of the picture elements (K) that are defined by a grid pattern, a respective correcting current (ik) is supplied to a coil which affects the deflection and the respective correcting current for a picture element Kn is triggered off at a starting point (SP) in the vicinity of the picture element Kn-1 which precedes it horizontally, characterised by an equipment for displacing the starting point (SP) to a point before the picture element Kn-1 by a dead time value (To), which is such that the transit times in the correcting signal path are compensated and the nominal value (iN) of the correcting current (ik) associated with the picture element Kn is attained at the time of occurrence of the picture element Kn, and by a store (20) in which the picture element dependent dead time values (To) are stored for the individual picture elements of the picture, which values are read out by controlling the store (20) by means of signals that are coupled to the vertical signal (vS) and the horizontal signal (hS) and are then used for the correction process.

2. Equipment in accordance with Claim 1, characterised in that, the position in time of the starting point (SP) can be adjusted.

3. Equipment in accordance with Claim 1 or 2, characterised in that, the value of the dead time (To(K)) is determined in dependence on the position of the picture element and is taken into account during the correction process.

4. Equipment in accordance with any of the Claims 1 to 3, characterised in that, the value for the dead time (To or To(K)) is determined in an adaptive manner.

## Revendications

1. Dispositif pour la correction d'image dans un téléviseur où un courant de correction (ik) est amené vers une bobine influant sur la déflexion pour chacun des points d'image (K) définis par une grille et où ledit courant de correction pour un point d'image (Kn) est déclenché dans un point de départ (SP) au niveau du point d'image Kn-1 précédant ce premier dans le sens horizontal, **caractérisé** par un dispositif pour le décalage dudit point de départ (SP) d'un certain temps de retard (To) avant ledit point d'image Kn-1 dont la valeur est telle que les temps de retard dans le trajet du signal de correction soient compensés et que l'intensité nominale (iN) du courant de correction (ik) correspondant au point d'image Kn soit atteinte au niveau de celui-ci, et **caractérisé en outre** par la présence d'une mémoire (20) dans laquelle sont enregistrées des valeurs de temps de retard (To) en fonction des points d'image pour les différents points de chaque image, sachant que, pour être utilisées pour la correction, lesdites valeurs sont extraites de ladite mémoire (20) en activant celle-ci à l'aide de signaux couplés avec le signal vertical (vS) et le signal horizontal (hS).

2. Dispositif selon la revendication 1 **caractérisé en ce** que la position dans le temps dudit point de départ (SP) peut être réglée.

3. Dispositif selon l'une quelconque des revendication 1 ou 2 **caractérisé en ce** que la valeur du temps de retard (To(K) est déterminée en fonction de la position des points d'image et prise en compte au moment de la correction.

4. Dispositif selon l'une quelconque des revendications 1 à 3 **caractérisé en ce** que la valeur du temps de retard (To ou To (K)) est déterminée de façon adaptative.
